# FASCICULE DE BREVET EUROPEEN

(11) **EP 3 075 021 B1**
(45) Date de publication et mention de la délivrance du brevet: **04.09.2019**
(21) Numéro de dépôt: 14806601.2
(22) Date de dépôt: 01.12.2014
(51) Int. Cl.: H01M 8/04089, H01M 4/04, H01M 8/04111, H01M 8/04119, H01M 8/0432, H01M 8/04537, H01M 8/04701, H01M 8/04746, H01M 8/04828, H01M 8/04858, H01M 8/1018

(54) **DISPOSITIF DE RECIRCULATION D'UNE PILE A COMBUSTIBLE**
REZIRKULATIONSVORRICHTUNG EINER BRENNSTOFFZELLE
RECIRCULATION DEVICE OF A FUEL CELL

(30) Priorité: 29.11.2013 FR 1361864
(43) Date de publication de la demande: 05.10.2016
(73) Titulaire: SYMBIOFCELL, 38000 Grenoble (FR)
(72) Inventeur: ROUVEYRE, Luc, F-73000 Chambery (FR)
(74) Mandataire: Brevalex
(86) Numéro de dépôt international: PCT/EP2014/076130
(87) Numéro de publication internationale: WO 2015/079066

(56) Documents cités:
- EP-A2- 1 902 954
- WO-A2-99/65090
- DE-U1- 20 210 130
- GB-A- 2 442 252
- US-A1- 2003 219 636
- US-A1- 2009 220 832

## Description

### DOMAINE TECHNIQUE

Le domaine technique de l'invention est celui des piles à combustible. La présente demande porte sur un dispositif et son procédé d'utilisation pour optimiser le fonctionnement de ce type de pile, plus particulièrement lors de transitions rapides entre des régimes de fonctionnement différents. L'invention peut donc être utilisée pour des piles à combustible fixes, ou plus avantageusement embarquées.

### ÉTAT DE LA TECHNIQUE ANTÉRIEURE

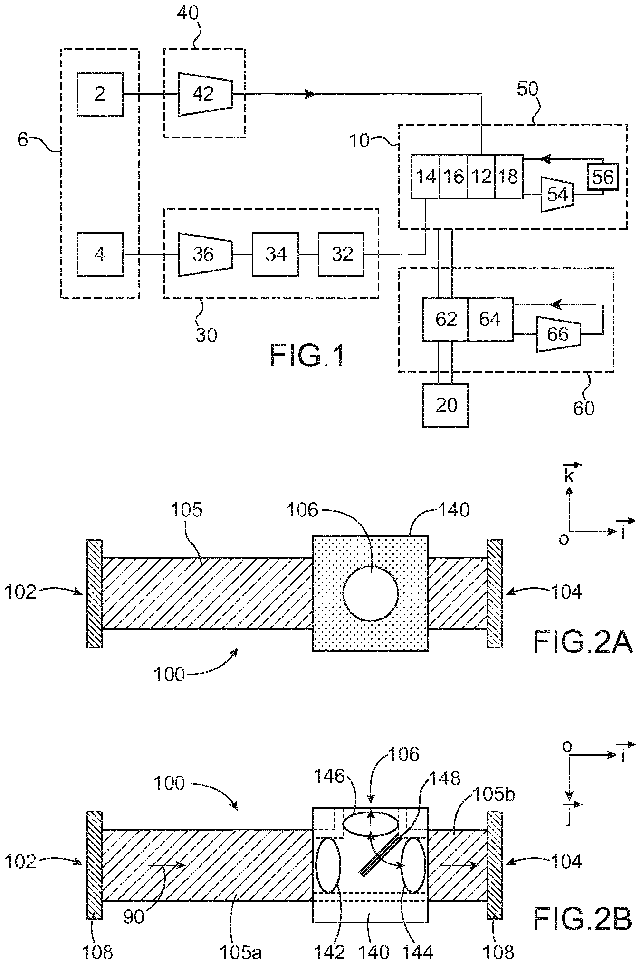

Une pile à combustible est un dispositif électrochimique délivrant une puissance électrique, de type continue, à un environnement client. Le dispositif répond à une sollicitation de cet environnement. La réponse est de type tension ou courant pour une sollicitation respectivement de type courant ou tension. La puissance électrique est produite par un module de production 10, comportant au moins une cellule électrochimique alimentée à partir d'un module de stockage 6, en carburant 2 et comburant 4 (figure 1). Le comburant peut par exemple être composé d'air ambiant. Une cellule électrochimique est composée des compartiments ou éléments, suivants :
- une anode 12 permettant d'oxyder le carburant 2 ;
- une cathode 14 permettant de réduire le comburant 4;
- une membrane 16 échangeuse de protons ou électrolyte, interposée entre la cathode et l'anode, assurant principalement le transfert des molécules de carburant oxydées ;
- un échangeur thermique (18) relié à un dispositif de refroidissement (50).

La membrane 16, également appelée PEMFC pour « Proton Exchange Membrane Fuell Cell », permet de séparer physiquement le carburant du comburant lorsqu'ils sont introduits dans leur compartiment respectif dans la cellule électrochimique. Par exemple, pour une pile à combustible de type PEMFC le carburant est de l'hydrogène, le comburant de l'oxygène.

L'hydrogène au contact de l'anode, libère des charges électriques et des protons :

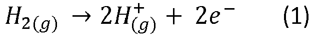

La membrane de la PEMFC joue le rôle d'électrolyte, assurant le transport des ions H⁺ de l'anode jusqu'à la cathode. Les réactants, issus du carburant et comburant, se regroupent alors sur les sites catalytiques de l'électrode cathodiques et réagissent selon la réaction suivante :

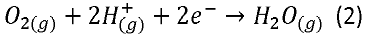

Les charges électriques nécessaires à cette réaction (2) proviennent de la réaction (1). Les charges électriques migrent de l'anode à la cathode par l'intermédiaire d'un dispositif conducteur ou un environnement client 20, branché aux bornes du module de production 10.

Ainsi, une pile peut être constituée par un empilement de cellules électrochimiques branchées électriquement en série. Chaque cellule électrochimique est reliée parallèlement à des connecteurs d'alimentation différents, délivrant le comburant, le carburant et éventuellement un fluide permettant de refroidir ladite cellule. Des collecteurs distincts de refoulement permettent d'évacuer le produit des réactions, le comburant, consommé ou non, et le fluide transportant une partie de la chaleur produite par la cellule électrochimique.

Le rendement en électricité de la cellule électrochimique dépend entre autre de sa température.

Par exemple, le rendement de la réaction (2) est optimal dans une gamme de température comprise entre 50°C et 70°C (thèse de M. Marielle MARCHAND, intitulée « Gestion de l'eau dans les piles à combustible », Institut Polytechnique de Grenoble, le 13 novembre 1998).

Or, au-delà de la température ambiante, la PEMFC 16 se dessèche sous l'effet conjugué de la température et des gaz s'écoulant dans la cellule électrochimique si ces derniers ne sont humidifiés. Ces zones sèches, également appelées zones mortes, ne permettent plus aux protons de diffuser à travers la PEMFC. La réaction (2) est donc stoppée au niveau de ces zones.

A l'inverse, un taux d'humidité trop important des gaz alimentant la pile à combustible favorise le dépôt d'un film liquide à la surface des électrodes, imperméable auxdits gaz et favorisant l'oxydation du support des électrodes. De nouveau la réaction électrochimique est stoppée au niveau des surfaces des électrodes qui sont recouvertes d'eau.

Afin d'éviter ces phénomènes, une pile à combustible comporte un dispositif auxiliaire d'humidification 32 permettant de contrôler le taux d'humidification du comburant injecté à la cathode 14.

Les inconvénients de ce dispositif sont son encombrement et le fait qu'il consomme, directement ou indirectement, une partie de l'électricité produite par le module de production 10.

Une pile à combustible est plus exposée à l'un des phénomènes précédents lorsque son environnement client 20 sollicite des variations d'appel de puissance électriques de fortes amplitudes sur un intervalle de temps court, notamment lors de la mise en route de la pile. Afin d'amortir les effets de ces brusques variations de puissance électrique, la pile est mise en veille ou « stand-by » suivant les possibilités de l'environnement client, ou de l'hybridation, dans laquelle elle est intégrée. Dans ce mode veille, la pile à combustible délivre un courant électrique permettant d'alimenter uniquement les modules auxiliaires nécessaires pour maintenir en veille la pile : compresseur (36) d'alimentation en comburant, pompe d'hydrogène (42), pompe de refroidissement (54), moyens de commande. La pompe de refroidissement (54) appartient à un dispositif de refroidissement (50) comprenant un échangeur de chaleur (56), l'ensemble étant relié à l'échangeur thermique (18). L'échangeur thermique 18 interne aux cellules électrochimique permet sa gestion thermique afin d'en garantir la pérennité. En effet, la puissance thermique induite par les irréversibilités électrochimiques est évacuée par le circuit de refroidissement 50 vers le milieu extérieur par l'intermédiaire de l'échangeur 18.

Les moyens 34 permettent de conditionner l'air sortant du compresseur afin d'obtenir un fonctionnement optimal de la section d'humidification 32. Usuellement ce conditionnement est de type thermique et a pour objectif de maintenir la température des gaz en amont des moyens 32 sous un niveau de saturation. Généralement ces moyens 34 comportent un dispositif de type « intercooler » ou « radiateur » utilisant l'air ambiant comme source froide.

Certes, ce mode veille permet de répondre plus rapidement à une rampe de puissance ou à une demande brusque de l'environnement client par rapport à un module de production initialement à l'arrêt, mais la faible puissance thermique générée par la pile dans ce mode, ne permet pas de maintenir la cellule électrochimique dans une gamme de température idéale ou optimum de fonctionnement. Un appel de puissance abrupte peut donc exposer la pile à combustible à l'un des phénomènes précédents (noyage et/ou assèchement) et compromettre son intégrité de manière définitive (J. P. Meyers et al., « Model of Carbon Corrosion in PEM Fuel Cells », Journal of the Electrochimical Society, 153 (8) A1432-A1442 (2006); L. M. Roen et al., « Electrocatalytic Corrosion of Carbon Support in PEMFC Cathodes », Electrochemical and Solid-State Letters, 7 (1), A19-A22 (2004)).

De plus, pour certains dispositifs, principalement pour des raisons économiques, un convertisseur de tension 62 est interposé entre la pile à combustible et son environnement client 20. Le convertisseur de tension permet de contrôler le courant ou la puissance générée par la pile à combustible, en découplant sa courbe de polarisation et/ou de tension de celle du réseau client. L'un des inconvénients des convertisseurs est qu'ils génèrent des oscillations de courant, également appelées « ripple current », aux bornes de la pile. Si ces oscillations ont une amplitude incompatible avec son architecture, une détérioration définitive de la pile peut survenir, diminuant de ce fait ses performances et sa durée de vie (Woojin Choi et al. « Development of an Equivalent Canal Model of a Fuel Cell to Eliminate the effects of Inverter Ripple Current »,0-7803-8269-2/04 (C) 2004 IEEE ; Randall S. Gemmen, "Analysis for the Effect of Inverter Ripple Current on Fuel Cell Operating Condition", Journal of Fluids Engineering, May 2003, Volume 125, Issue 3, pages 576-585, doi: 10.1115/1.1567307).

De plus, un convertisseur de tension est refroidi afin de pérenniser ses composants. Pour faire circuler un fluide caloporteur on ajoute une boucle de refroidissement qui intègre un échangeur de chaleur 64, un circuit de refroidissement, un groupe moto ventilateur (GNV) et une pompe. Une autre possibilité peut consister à utiliser un ventilateur, pour faire circuler l'air ambiant à travers un échangeur de chaleur connecté au circuit de refroidissement, de type ailettes, permettant de dissiper une partie de l'énergie thermique générée par le convertisseur de tension 62.

Une pile à combustible comporte donc en plus du module de production 10 et du module de stockage 6, des modules auxiliaires 30, 40, 50, 60 encombrants et consommant une partie de l'énergie produite par la pile à combustible, diminuant de ce fait son rendement.

L'un des objectifs de l'invention est donc de réaliser un dispositif permettant :
- de maintenir en mode veille une pile à combustible dans une gamme de température optimale ou idéale à son fonctionnement ;
- et/ou d'éliminer les oscillations de courant induites aux bornes de la pile à combustible ;
- et/ou de diminuer l'encombrement des dispositifs auxiliaires assurant son fonctionnement.

Le document US 2003/219636 décrit un dispositif et un procédé pour alimenter la cathode d'une pile à combustible avec un flux oxydant.

Le document DE 202 10 130 décrit un dispositif de test pour une pile à combustible.

Le document WO99/65090 décrit pour dispositif et un procédé de la gestion de l'eau lors de l'utilisation d'une pile à combustible.

### EXPOSÉ DE L'INVENTION

L'invention permet de résoudre au moins l'un des problèmes précédents grâce à un circuit d'alimentation d'une cathode d'au moins une cellule électrochimique selon la revendication 1.

Un tel circuit comporte un canal d'alimentation interne à la pile à combustible permettant à un fluide circulant dans le canal d'alimentation d'être en contact avec ladite cathode.

La cathode est de type fermée, c'est à dire qu'elle n'est alimentée que par le canal d'alimentation.

Un canal de refoulement interne à la pile à combustible permet l'évacuation du ou des réactants distribués dans la cellule par le canal d'alimentation mais qui n'ont pas été consommé.

Les moyens d'évacuation peuvent être commandés ou sont réglables ou pilotables. Quel que soit le courant, on peut donc contrôler, commander ou piloter ces moyens d'évacuation ; autrement dit, ces derniers sont indépendants du courant de, ou débité par, la cellule.

Le canal de recirculation relie la sortie du canal de refoulement à l'entrée du canal d'alimentation pour permettre l'introduction dans le canal d'alimentation d'au moins une partie du fluide sortant du canal de refoulement. Le terme « fluide » peut désigner un composé liquide et/ou gazeux, comportant des éléments réagissant chimiquement au contact de l'électrode.

Dans le cadre de la présente demande, le terme « connecté » peut désigner deux éléments reliés entre eux de manière à ce qu'un fluide puisse circuler entre lesdits éléments. L'expression « indirectement connecté » peut par exemple désigner un ou plusieurs éléments interposés entre le canal d'alimentation et le canal de recirculation et permettant à au moins une partie du fluide sortant du canal d'alimentation d'entrer de nouveau dans ledit canal.

Les moyens d'évacuation peuvent comporter un obturateur mobile permettant de répartir la quantité de fluide s'écoulant par la seconde ouverture et la troisième ouverture du canal de recirculation.

Les moyens d'évacuation, par exemple l'obturateur mobile, permettent de répartir la quantité de fluide s'écoulant par la seconde ouverture et la troisième ouverture du canal de recirculation. Ces moyens d'évacuation comportent par exemple une vanne de type trois voies. Un obturateur mobile permet de répartir le fluide entre les différentes voies. Il permet de 'balancer' le flux de réactants sortant par le canal de refoulement entre la première et la deuxième et la troisième ouverture.

La seconde ouverture du canal de recirculation est connectée à l'entrée du canal d'alimentation par l'intermédiaire d'un raccord, comprenant une ouverture permettant à un autre fluide de se mélanger avec le fluide sortant du canal de recirculation par la deuxième ouverture. Autrement dit, un tel raccord peut comporter au moins trois ouvertures, dont une première ouverture est connectée à la deuxième ouverture du canal de recirculation et une deuxième ouverture est connectée à l'entrée du canal d'alimentation.

Les moyens d'évacuation, par exemple l'obturateur mobile, peuvent être commandés par un dispositif de commande manuel, contrôlé par un utilisateur de la cellule électrochimique, ou bien par un dispositif de commande, par exemple électromécanique ; ce dernier peut être par exemple commandé par un dispositif ou des moyens de supervision.

Le canal d'alimentation peut comporter un compresseur permettant de contrôler le débit du fluide s'y écoulant. Lorsque, comme expliqué ci-dessus, il y a présence d'un raccord, le compresseur peut être connecté ou disposé en amont d'une des ouvertures du raccord, entre celui-ci et l'entrée du canal de recirculation. On amène ainsi un fluide à la cathode. De préférence, afin de perturber le moins possible le fonctionnement du compresseur par les turbulences créées par le mélange du fluide avec un autre fluide, le compresseur est situé le plus loin possible dudit raccord.

Un compresseur peut être connecté en amont ou à l'ouverture du raccord et/ou un compresseur peut être connecté au canal de recirculation entre la sortie du canal d'alimentation et les moyens d'évacuation.

Autrement dit, un ou plusieurs compresseurs permet/permettent de contrôler les débits et/ou la proportion des fluides à mélanger dans le raccord.

Le ou le(s) compresseur(s) permettent d'atteindre, en entrée de cellule, une pression inférieure ou égale à 2 bar ou comprise entre, d'une part, 1 bar, ou 1,2 bar ou 1,3 bar ou encore 1,5 bar, et, d'autre part, 2 bar.

Selon une réalisation, les moyens de commande comportent des moyens pour recevoir au moins signal d'au moins un capteur de pression et/ou d'au moins un capteur de température et/ou un capteur de débit, et/ou un capteur de concentration d'oxygène et/ou un capteur d'humidité et/ou un signal des bornes électriques de ladite cellule électrochimique et/ou de ladite cathode.

Des moyens de mémorisation et/ou d'enregistrement des mesures précédentes et/ou des ordres provenant du dispositif de commande électronique et/ou des moyens de calcul peuvent être prévus.

Une sortie peut permettre de contrôler le débit du fluide s'écoulant dans le canal de recirculation.

Une interface de communication peut en outre être prévue.

Un circuit d'alimentation selon l'invention peut être muni d'au moins un capteur de pression, par exemple positionné pour mesurer une pression dans le canal de recirculation.

Un circuit d'alimentation selon l'invention peut être muni d'au moins un capteur de température.

Un circuit d'alimentation selon l'invention peut être muni d'au moins un capteur de débit, et/ou un capteur de concentration d'oxygène et/ou un capteur d'humidité

Le circuit d'alimentation selon l'invention peut en outre comporter un dispositif d'humidification, qui peut par exemple être disposé en interface entre l'entrée du canal d'alimentation et la sortie du canal de refoulement, de manière à pouvoir réinjecter une partie de l'humidité sortant du canal de refoulement vers le canal d'alimentation.

Le canal de recirculation peut comporter des moyens permettant de contrôler la quantité ou la proportion des éléments transportés par le fluide, permettant par exemple de mesurer et/ou de faire varier son taux d'humidité en filtrant une partie de l'eau transportée par ledit fluide.

Le nombre de canaux de recirculation connectés à une pile à combustible comportant la cellule électrochimique peut être compris entre 1 et le nombre de canaux d'alimentation compris de ladite pile.

Un canal de recirculation peut collecter un même fluide sortant d'un ou plusieurs canaux d'alimentation, et distribuer ledit fluide à l'entrée d'un ou plusieurs canaux d'alimentation.

Une ligne d'échappement peut être connectée à la troisième ouverture du canal de recirculation pour permettre l'évacuation du fluide, par exemple pour l'évacuer à une distance souhaitée de la cellule électrochimique. La longueur du canal de recirculation séparant la première ouverture de la seconde et/ou de la troisième ouverture peut être comprise entre quelques centimètres et plusieurs dizaines de centimètres, par exemple entre 5 cm et 10 cm ou 50 cm. Par exemple, elle peut être comprise entre quelques centimètres et 30 cm pour les piles à combustible produisant 5KW ou plus d'énergie électrique, et entre quelques centimètres et 50 cm pour celles produisant plus de 100KW d'énergie électrique.

Eventuellement, le canal de recirculation peut être isolé thermiquement afin de préserver l'énergie thermique du fluide le traversant.

Une cellule électrochimique selon l'invention comporte une membrane séparant une anode et une cathode et un circuit d'alimentation selon l'invention.

Une ou plusieurs cellules électrochimiques ci-dessus peuvent former une pile à combustible. Plusieurs cellules électrochimiques appartenant à une même pile sont de préférence connectées en série électriquement et, du point de vue fluidique, en parallèle.

Ainsi, une ou plusieurs cellules électrochimiques selon l'invention peuvent être disposée(s) à bord d'un véhicule terrestre ou marin, pour en alimenter la chaîne de traction, et/ou une ou plusieurs fonctionnalité de bord, et/ou recharger des moyens de stockage d'énergie électrochimique (par exemple une ou plusieurs batterie(s)) ou capacitif (par exemple une ou plusieurs ultra-capacité(s))

L'invention concerne donc également un véhicule terrestre ou marin comportant une ou plusieurs cellules électrochimiques selon l'invention.

Une ou plusieurs cellules électrochimiques selon l'invention peuvent ne pas comporter de convertisseur de tension. Par exemple une ou plusieurs cellules électrochimiques selon l'invention sont disposée(s) à l'interface avec un réseau, sans convertisseur de tension.

Une ou plusieurs cellules électrochimiques selon l'invention peuvent ne pas comporter de dispositif auxiliaire d'humidification.

L'invention concerne également un dispositif d'alimentation d'un réseau électrique, comportant une cellule électrochimique munie d'au moins un circuit d'alimentation selon l'invention, ou une pile selon l'invention, sans convertisseur de tension, et comportant en outre un capteur de courant pour l'interface avec le réseau.

L'invention concerne également un réseau électrique comportant en outre un tel dispositif d'alimentation selon l'invention, un capteur de courant étant disposé entre ladite cellule et le réseau.

L'invention concerne également un procédé d'utilisation d'une cellule électrochimique ci-dessus, ou d'une cellule électrochimique comportant un circuit d'alimentation selon l'invention, ce procédé comportant une étape de réglage des moyens d'évacuation, par exemple par changement de position de l'obturateur mobile, de sorte à contrôler la proportion de fluide provenant du canal de refoulement qui est réintroduit dans le canal d'alimentation du même circuit. On peut ainsi, par action sur les moyens d'évacuation, modifier ladite proportion de fluide.

L'invention concerne également un procédé d'utilisation d'une cellule électrochimique ci-dessus ou d'une cellule électrochimique comportant un circuit d'alimentation selon l'invention.

En particulier, un tel procédé peut comporter une étape de changement du régime de fonctionnement, à l'aide des moyens d'évacuation qui sont pilotés ou commandés, par exemple à l'aide d'un obturateur, et/ou à l'aide un ou plusieurs compresseurs mentionnés ci-dessus, afin de contrôler la proportion de fluide réintroduit dans le canal de recirculation.

L'invention concerne également un procédé d'utilisation d'au moins une cellule électrochimique comportant un circuit d'alimentation selon l'invention ou d'une pile selon l'invention ou d'un dispositif d'alimentation selon l'invention :
- le régime de fonctionnement du compresseur étant modifié de sorte que la température de la cellule électrochimique soit égale ou supérieure à 50°C ;
- et/ou les moyens d'évacuation étant contrôlés en fonction de la valeur de la tension électrique aux bornes de la cellule électrochimique et/ou de sa température interne et/ou de sorte que la température de la cellule électrochimique soit égale ou supérieure à 50°C ;
- et/ou dans lequel on fait varier le courant fourni et/ou la puissance fournie en commandant ou en réglant ou en ajustant les moyens d'évacuation, par exemple sur la base du signal fourni par un capteur de courant.

Un procédé de fonctionnement d'une ou plusieurs cellules électrochimiques selon l'invention, sans convertisseur de tension (par exemple à l'interface avec un réseau), est très avantageux car sans phénomène d'oscillations.

Dans une cellule selon l'invention, lorsque le fluide est mis au contact de l'électrode, une réaction exothermique se produit et libère de la chaleur. Une partie de cette chaleur est évacuée de la cellule électrochimique par le fluide sortant du canal d'alimentation. Avantageusement, l'invention permet de réintroduire au moins une partie de cette chaleur dans la cellule électrochimique par l'intermédiaire du canal de recirculation. La température de la cellule électrochimique peut ainsi être plus aisément maintenue et/ou amenée à une température souhaitée en fonction de la position de l'obturateur mobile et/ou du régime de fonctionnement d'un ou des compresseurs mentionnés ci-dessus.

De préférence, la cellule électrochimique est chauffée via les irréversibilités de la réaction électrochimiques, ou peut-être maintenue partiellement, par le fluide sortant du canal d'alimentation, à une température égale ou supérieure à 50°C, ou dans des gammes de températures comprises entre 50°C et 70°C, ou entre 50°C et 95°C, ou entre 50°C et 105°C. Cette température est la température dans la cellule, pas (ou pas seulement) la température d'entrée des fluides. Lors des phases de faibles puissances, notamment en « standby », par exemple lorsque la pile n'alimente que ses auxiliaires, la chaleur générée n'est plus suffisante pour assurer le maintien en température de la pile. Si la température de la cellule électrochimique sort de l'une de ces gammes de températures, le contrôle des moyens d'évacuation, par exemple par modification de la position de l'obturateur mobile, permet de contrôler la proportion de fluide provenant du canal d'alimentation et réintroduit dans le même canal. Autrement dit, les moyens d'évacuation, par exemple la position de l'obturateur mobile, peuvent/peut être adaptés/adaptée pour que la température de la cellule électrochimique, en mode veille, ne soit pas inférieure à 50°C, et ce afin que la cellule électrochimique puisse répondre rapidement à des demandes brusques de l'environnement client. Le canal de recirculation assure alors une fonction de roue enthalpique, permettant le recyclage d'une partie ou de la totalité de l'énergie thermique produite par la cellule électrochimique. De plus, la recirculation se faisant sur le canal cathodique, celle-ci permet d'abaisser ou d'augmenter les irréversibilités électrochimiques et ainsi de réguler la chaleur que celle-ci produit, notamment à charge partielle.

La position de l'obturateur mobile peut également être modifiée en fonction de l'état de la cellule électrochimique et/ou de la demande de l'environnement client. Par exemple, la position de l'obturateur mobile peut être modifiée en fonction de la valeur de la tension électrique aux bornes de la cellule électrochimique et/ou de sa température interne.

Le ou les compresseurs mentionnés précédemment peuvent permettre de contrôler la proportion de fluide provenant du canal de refoulement ou de recirculation qui est réintroduit dans un canal d'alimentation identique ou différent. Par exemple, le débit du fluide sortant du canal de refoulement ou de recirculation peut être modifié en fonction du régime de fonctionnement d'un compresseur connecté au canal de recirculation. En fonction de ce débit, la proportion du mélange de fluide pouvant s'effectuer au niveau du raccord peut être contrôlée.

A titre d'exemple, lorsqu'on augmente la quantité de fluide réintroduit dans le canal d'alimentation, on peut diminuer la concentration de comburant transporté par le fluide. De ce fait, le rendement de la cellule électrochimique est diminué. L'effet inverse peut être obtenu en augmentant la quantité de fluide sortant par la troisième ouverture du canal de recirculation et/ou en abaissant le débit du fluide sortant de la seconde ouverture du canal de recirculation par l'intermédiaire d'un compresseur. En d'autres termes, le contrôle des moyens d'évacuation, par exemple le réglage de la position de l'obturateur mobile et/ou le régime de fonctionnement d'un ou plusieurs compresseurs ci-dessus, peut être adapté en fonction de la demande de l'environnement client, pour pouvoir satisfaire cette demande en temps réel.

Le contrôle des moyens d'évacuation, par exemple la position de l'obturateur mobile et/ou le régime de fonctionnement d'un compresseur ci-dessus, permet ainsi de contrôler à volonté et à tout moment la proportion de comburants introduit dans le canal d'alimentation suivant la loi de la conservation des espèces ou la loi de conservation de la masse, ainsi que la température de la cellule électrochimique. Le rendement de la cellule électrochimique peut de cette façon être maîtrisé et adapté en temps réel selon la demande de son environnement client.

L'invention peut donc permettre de contrôler, en temps réel, la courbe de polarisation d'une cellule électrochimique ou d'une pile comportant plusieurs cellules électrochimiques.

### BRÈVE DESCRIPTION DES DESSINS

D'autres détails et caractéristiques de l'invention apparaîtront de la description qui va suivre, faite en regard des figures annexées suivantes.

Les parties identiques, similaires ou équivalentes des différentes figures portent les mêmes références de façon à faciliter le passage d'une figure à une autre. Les différentes parties représentées sur les figures ne le sont pas nécessairement selon une échelle uniforme, pour rendre les figures plus lisibles. Les repères indiqués sur les figures sont orthogonaux.
La figure 1 représente une pile à combustible et ses modules auxiliaires assurant son fonctionnement.
La figure 2A représente un canal de recirculation.
La figure 2B représente une coupe longitudinale d'un élément appartenant au canal de recirculation représenté en figure 2a.
La figure 2C représente une variante du canal de recirculation représenté en figure 2B.
La figure 3 représente un mode de réalisation de l'invention comportant une cellule électrochimique représentée en figure 3, connecté à un canal de recirculation représenté en figure 2C.
La figure 4 représente une variante d'un canal de recirculation représenté en figure 2A.
Les figures 5, 6A - 6C représentent plusieurs modes de réalisation de l'invention.
La figure 7 représente un mode de réalisation de l'invention comprenant un compresseur.
La figure 8 représente un mode de réalisation de l'invention comprenant deux compresseurs.
La figure 9 représente un mode de réalisation de l'invention comprenant un dispositif d'humidification.
La figure 10 représente un mode de réalisation de l'invention dans lequel un canal de recirculation est connecté à plusieurs cellules électrochimiques.
La figure 11 représente la tension et la puissance électrique délivrée par une pile à combustible (traits solides) et un dispositif selon l'invention (traits en pointillés).
Les figures 12a à 12c représentent un empilement de cellules électrochimiques.
La figure 13 représente un empilement de cellules électrochimiques selon l'invention, et un réseau.

### EXPOSÉ DÉTAILLÉ DE MODES DE RÉALISATION PARTICULIERS

L'invention concerne une cellule électrochimique de type PEMFC ou une cellule d'un empilement de cellules électrochimiques de ce type.

Cette cellule comporte notamment un canal de recirculation permettant à un fluide, sortant d'un canal de refoulement appartenant au circuit de ladite cellule ou dudit empilement, d'être réintroduit dans ladite cellule ou ledit empilement par le canal d'alimentation.

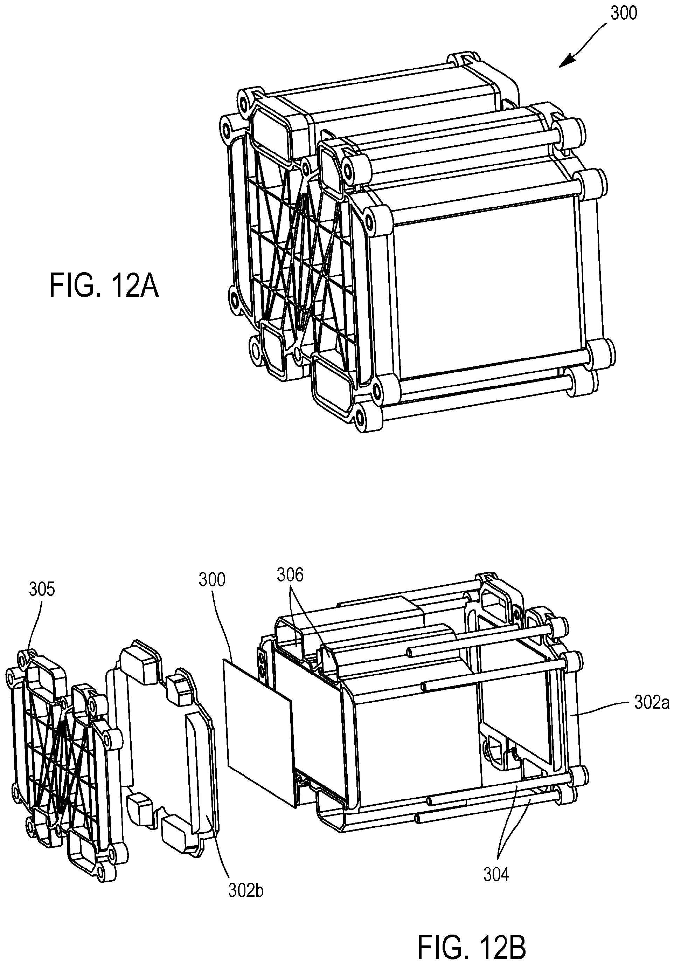

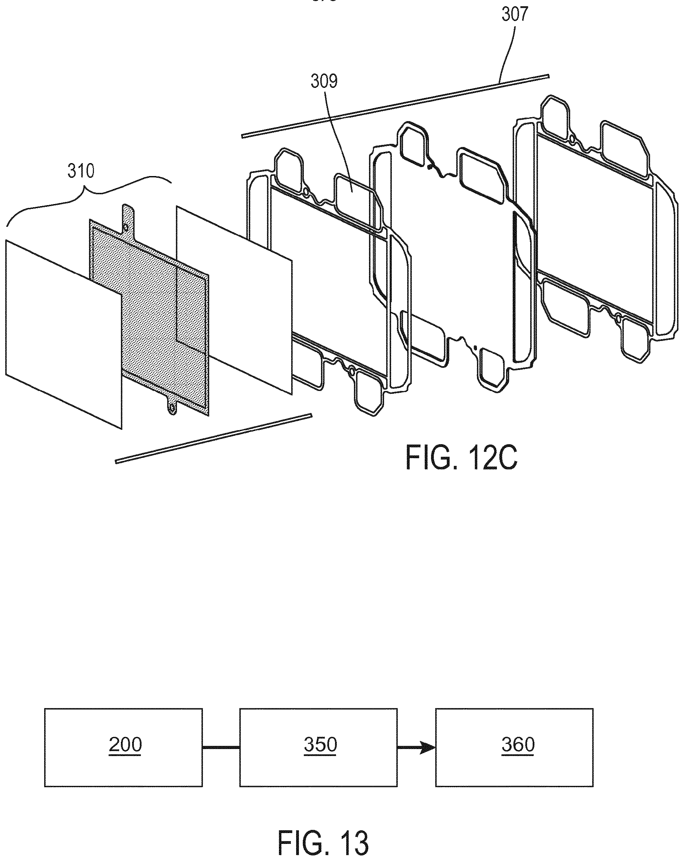

Un exemple de pile, ou d'un empilement 300 de cellules électrochimiques, auquel l'invention peut être appliquée, est donné en figures 12A - 12C. Un tel dispositif comporte un ensemble 301 formant un empilement de cellules électrochimiques; un tel ensemble peut en outre comporter deux plaques terminales 302a, 302b. Des moyens 304 de serrage peuvent être prévus, pour maintenir l'ensemble en compression.

Chaque plaque terminale peut comporter un collecteur de courant assurant la liaison électrique entre le système et les deux cellules d'extrémité de l'empilement. Ce composant est réalisé en matériau conducteur électrique et, de préférence, assure aussi un contact électrique avec lesdites cellules électrochimiques, par exemple à un très faible niveau de résistivité. Ce collecteur de courant est inséré dans l'une des plaques terminales isolantes électriquement 302b qui comprime le collecteur 303 contre les cellules d'extrémité. De préférence ladite plaque terminale intègre une ou des interfaces fluides qui permettent de connecter une ou plusieurs boucles fluides du système.

Pour assurer la tenue mécanique de l'ensemble complet il est possible de mettre en oeuvre un raidisseur 305, qui vient par exemple de s'appuyer contre la plaque terminale 302b, renforçant ainsi la tenue mécanique de cette dernière.

Des moyens de fermeture peuvent être prévus, pour maintenir la compression souhaitée de l'empilement électrochimique 300 entre les collecteurs de courant 303. Selon une réalisation, cet ensemble de fermeture peut comporter des tirants et/ou des sangles.

Un tel empilement de cellules électrochimique peut comporter un canal ou plusieurs canaux de refoulement et d'admission d'un ou plusieurs fluides, par exemple un fluide comburant, et/ou un fluide carburant et/ou un fluide de refroidissement, chacun traversant chaque cellule. Ces dernières peuvent être alimentées en parallèle grâce auxdits canaux.

Chaque canal peut résulter de l'empilement des cellules. En effet une cellule électrochimique peut comporter une plaque bipolaire 307 et un coeur électrochimique 310, comportant une membrane sur chaque côté de laquelle une électrode est formée. Ces deux éléments peuvent être ajourés d'une ou plusieurs lumières 309 ayant pour fonction de permettre le passage d'un ou plusieurs fluides d'alimentation et/ou de refoulement, d'une cellule à l'autre. Et l'empilement de ces lumières forme un canal ou plusieurs canaux d'alimentation et/ou de refoulement de fluide permettant l'alimentation en parallèle de chaque cellule.

Chaque cathode est de type fermée, c'est-à-dire qu'elle n'est alimentée que par le canal d'alimentation. Afin de faciliter la compréhension de l'invention, l'exposé ci-dessous décrit en premier lieu un exemple de réalisation d'un canal de recirculation, puis un exemple de réalisation de l'invention comportant ledit canal, suivi de plusieurs variantes de réalisation de l'invention et enfin un procédé d'utilisation de l'invention.

Un canal de recirculation 100 selon l'invention permet l'introduction dans un canal d'alimentation d'une électrode ou d'un ensemble d'électrodes, appartenant à une cellule électrochimique ou à un empilement de cellules électrochimiques, d'un fluide sortant de ladite cellule ou desdites cellules dans le canal de refoulement. Le terme fluide 90 ou comburant désigne tous éléments, sous forme gazeuse et/ou liquide, permettant d'augmenter et/ou de diminuer le rendement d'une réaction électrochimique se produisant à la surface d'une électrode appartenant à la cellule électrochimique. Par exemple, pour une pile à combustible à hydrogène, le fluide 90 mis au contact d'une cathode comporte préférentiellement de l'oxygène, et éventuellement de l'eau et de l'azote. Les moyens permettant de mettre en contact le fluide 90 avec une électrode sont appelés ci-dessous canal d'alimentation et de refoulement 220 et 280. Un premier exemple de canal de recirculation 100 est à présent décrit.

Selon cet exemple, illustré en figures 2a et 2b, un canal de recirculation 100 qui comporte une première ouverture 102 et une deuxième ouverture 104 reliées par un canal 105.

Ce canal s'étend sensiblement longitudinalement, le long d'un axe Ox. Il est délimité par une paroi 105, étanche ou au moins partiellement étanche au fluide 90. La longueur du canal reliant les ouvertures 102 et 104 peut être comprise entre quelques centimètres et plusieurs mètres ou entre quelques centimètres et plusieurs décimètres, par exemple entre, d'une part, 1 cm ou 5 cm et, d'autre part, 50 cm ou 1 m ou encore 5 m.

La section du canal 105, définie dans un plan perpendiculaire à sa longueur, peut être de forme circulaire. Mais elle peut avoir une autre forme, par exemple ovale, ou rectangulaire ou carrée. La dimension maximum de cette section peut être comprise entre quelques centimètres et plusieurs décimètres, par exemple entre, d'une part, 1 cm ou 5 cm et, d'autre part, 10 cm ou 50 cm.

Le canal de recirculation 100 comporte des moyens ou un dispositif d'évacuation 140, permettant d'évacuer, à l'extérieur du canal 105, par l'intermédiaire d'une troisième ouverture 106, disposées latéralement par rapport au canal, au moins une partie du fluide 90 circulant dans celui-ci.

Ces moyens d'évacuation 140 comportent ici:
- un premier passage ou une première entrée 142, reliée à la première ouverture 102 par une première partie 105a du canal 105, disposée en amont des moyens 140 par rapport au sens de circulation du fluide ;
- un deuxième passage ou une première sortie 144, reliée à la deuxième ouverture 104 par une deuxième partie 105b du canal 105, disposée en aval des moyens 140 par rapport au sens de circulation du fluide ;
- un troisième passage ou une deuxième sortie 146, correspondant dans cet exemple à la troisième ouverture 106.

Par exemple un obturateur mobile 148 permet de répartir le fluide 90, qui est entré dans le canal par la première ouverture 102, entre la deuxième ouverture 104 et la troisième ouverture 106.

En d'autres termes, le dispositif d'évacuation 140 comporte une vanne, ou fonctionne comme une vanne, de type trois voies. Les flèches de la figure 2B indiquent le sens d'écoulement du fluide dans le canal de recirculation 100.

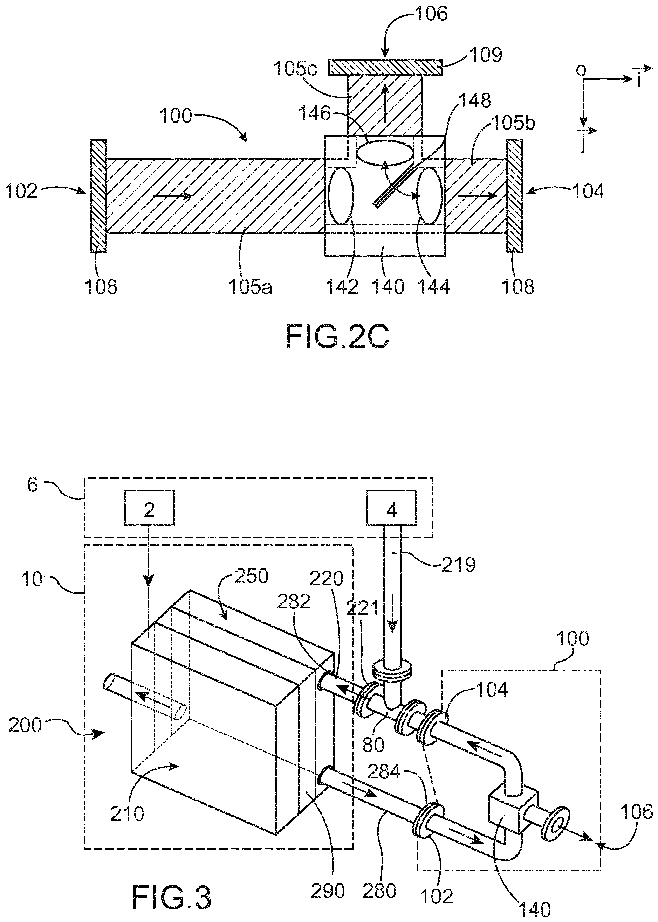

Les moyens d'évacuation, par exemple la position de l'obturateur mobile 148, peuvent être commandés par un dispositif de commande manuel (non représenté sur les figures), permettant à un utilisateur de contrôler de façon réversible et à volonté la proportion de fluide s'écoulant entre la deuxième ouverture et la troisième ouverture du canal de recirculation 100. Eventuellement, et comme illustrée sur la figure 2C, la deuxième sortie 146 du dispositif d'évacuation 140 est prolongée par une portion 105c d'un canal 100 de manière à former une ligne d'échappement permettant d'éloigner la troisième ouverture 106 de la paroi du canal 105 de recirculation.

De préférence, la ligne d'échappement positionne l'ouverture 106 à l'extérieur de la pile à combustible comportant la cellule électrochimique ou l'empilement de cellules électrochimiques 200.

Quel que soit le mode de réalisation envisagée pour le canal de recirculation 100, celui-ci est de préférence réalisée dans des matériaux déformables ou souples afin de faciliter sa connexion à une cellule électrochimique, comme expliqué ci-dessous.

La paroi du canal de recirculation peut être composée de matériaux organiques (polymères) ou inorganiques (métaux). Par exemple le canal de recirculation peut-être composé d'une durite mono-bloc, moulée en silicone, de préférence semi-rigide.

Le canal de recirculation 100 peut comporter des moyens permettant de minimiser les pertes thermiques par sa paroi. Par exemple, la surface externe de la paroi peut être recouverte d'un matériau isolant, tel que de la mousse expansée. De cette façon, la chaleur d'un fluide est préservée lors de son passage dans le canal de recirculation.

Un exemple de réalisation d'un circuit d'alimentation selon l'invention, comportant un canal de recirculation tel que ci-dessus, est décrit en liaison avec la figure 3.

Sur cette figure, est représentée une pile comportant une anode 210, une cathode 250, et une membrane 290, interposée entre la cathode est l'anode. Cette membrane 290 est imperméable aux fluides réactants et aux charges électriques mais perméables aux protons. La membrane est échangeuse de protons elle constitue un électrolyte), et assure principalement le transfert des molécules de carburant oxydées. Elle est également appelée PEMFC pour « Proton Exchange Membrane Fuell Cell », et permet de séparer physiquement le carburant du comburant lorsqu'ils sont introduits dans leur compartiment respectif dans la cellule électrochimique. Par exemple, pour une pile à combustible de type PEMFC le carburant est de l'hydrogène, le comburant de l'oxygène.

L'anode 210 est alimentée en carburant, par une source à hydrogène gazeuse qui peut être à haute pression (par exemple à pression inférieure ou égale à 700 bar, par exemple encore comprise entre 100 bar, ou 400 bar, ou 500 bar, et 700 bar) ou par une source d'hydrogène à pression sensiblement voisine de la pression atmosphérique, par exemple une source d'H liquide cryogénique. Un dispositif de reformage pour générer de l'hydrogène n'est pas nécessaire.

Chacun de ces modes de réalisation peut trouver une application dans le domaine automobile.

Un mode de réalisation particulièrement intéressant est celui d'une alimentation de la cathode en air, à la pression atmosphérique ; ce mode de réalisation trouve lui aussi une application dans le domaine automobile.

Le dispositif comporte donc des moyens d'alimentation de l'anode en carburant (de l'hydrogène) qui permet de fournir de l'hydrogène aux pressions indiquées ci-dessus. Il comporte des moyens d'alimentation de la cathode, qui permet de fournir de l'air ou de l'oxygène aux pressions indiquées ci-dessus.

La référence 6 désigne un module de stockage, en carburant et en comburant. La référence 10 désigne le module de production comportant au moins une cellule électrochimique alimentée à partir dudit module de stockage.

La cathode 250 est alimentée en comburant, en général de l'air, à partir d'un réservoir 4 ou à partir d'air atmosphérique. Plus précisément, le comburant est amené à partir de ce réservoir par un canal 219 d'alimentation, un raccord 80, puis un canal d'alimentation 220 de la cathode.

Dans la cathode, le fluide, appauvri de l'oxygène consommé par la réaction électrochimique, est ensuite dirigé vers un circuit de refoulement 280, dont une partie est visible en figure 3.

Sur la figure 3 les flèches indiquent la circulation du fluide réactant 90 dans les canaux, avant entrée dans d'empilement, et en sortie de l'empilement.

Un canal de recirculation 100 du type décrit ci-dessus, par exemple celui décrit en liaison avec la figure 2C, est connecté à la cellule électrochimique ou à un empilement de cellules électrochimique de la façon suivante.

La sortie 284 du canal de refoulement 280 de la cathode 250 est connectée à la première ouverture 102 du canal de recirculation 100 et la deuxième ouverture 104 du canal de recirculation est connectée (ici indirectement) à l'entrée 221 du canal de d'alimentation 220 par l'intermédiaire du raccord 80. Ce dernier comporte :
- une première ouverture connectée à la deuxième ouverture 104 du canal de recirculation ;
- une deuxième ouverture connectée à l'entrée 221 du canal d'alimentation 220 ;
- une troisième ouverture pour l'introduction du fluide provenant du réservoir 4.

Un ou plusieurs capteurs de pression peuvent être positionnés dans le canal de circulation 100. Une ou plusieurs sondes de température peuvent être également être disposées dans ce canal, par exemple à proximité des capteurs de pression.

Au moins un capteur de débit, et/ou un capteur de concentration d'oxygène et/ou un capteur d'humidité peut/peuvent être disposés dans l'un des canaux.

Plusieurs variantes du dispositif ci-dessus sont décrites ci-après, ces variantes peuvent être combinées entre elles pour permettre l'obtention d'autres modes de réalisation.

Selon une première variante, le canal de recirculation 100 et le raccord 80 forment une seule et même pièce.

Selon une autre variante de l'invention, les ouvertures 102 et 104 du canal de recirculation comportent des moyens de fixation permettant de faciliter le raccord du canal de recirculation 100 à l'entrée et à la sortie d'un canal d'alimentation 280. Ces moyens permettent par exemple de réaliser un sertissage ou un collage ou un surmoulage de l'ouverture 104 autour d'une portion du raccord 80.

Selon encore une autre variante d'un dispositif décrit ci-dessus, pour améliorer l'étanchéité du dispositif, un ou plusieurs joints toriques, ou joints plats, est/sont intercalés entre les différents éléments connectés ensemble.

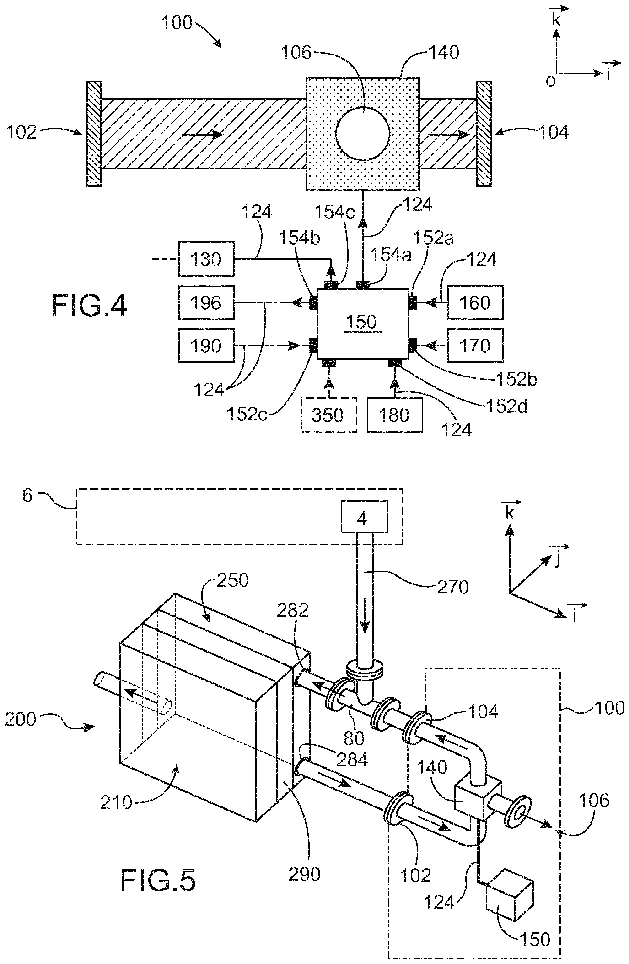

Selon encore une autre variante, les moyens 140 sont pilotés par des moyens 150 de commande, comportant par exemple un dispositif électronique (figures 4 et 5). Ces moyens 150 comportent par exemple un ordinateur ou un microprocesseur ou un processeur, éventuellement programmé pour mettre en oeuvre un pilotage des moyens 140. En variante ces moyens 150 comportent un dispositif susceptible de lire un support matériel (par exemple une clé USB ou tout autre type de mémoire) sur lequel est enregistré un programme, pour mettre en oeuvre un pilotage des moyens 140.

Par exemple la position de l'obturateur mobile 148 peut être modifiée par ces moyens 150.

Ces moyens 150 de commande (appelés encore dispositif de supervision bas) peuvent comporter :
- au moins une entrée 152a permettant au système électronique 150 de recevoir au moins un signal ;
- des moyens de mémorisation de signaux ;
- des moyens de calculs ;
- au moins une sortie 154a reliée à des moyens 140 permettant de contrôler la position de l'obturateur mobile 148.

Les moyens de commande 150 peut également comporter une sortie 154b connectée à une interface de communication 196, de type écran d'affichage. Une entrée 152c peut également être connectée à une interface de communication 190, de type clavier d'ordinateur, permettant à un opérateur d'entrer des informations dans le dispositif 150. Le système électronique 150 peut être un dispositif de type ordinateur ou micro-ordinateur.

Une entrée 152a des moyens de commande peut être reliée à au moins un capteur de pression 160, par exemple positionnés dans le canal de recirculation 100.

Une entrée des moyens de commande peut être reliée à au moins un capteur de courant 350 qui peuvent être eux-mêmes disposés, comme expliqué plus loin (figure 13), entre une cellule ou une pile selon l'invention et un réseau électrique 360 ainsi alimenté.

Au moins une sonde de température 170 peut être connectée à une entrée 152b des moyens de commande 150. La ou les sondes de température peuvent être positionnées à proximité des capteurs de pression. De préférence, au moins un capteur de température 170 peut être positionné au contact ou à proximité :
- de l'électrode ;
- et/ou de sa plaque de support, par exemple la plaque 302b, de préférence encore à proximité du canal de refoulement
- et/ou d'un dispositif permettant le refroidissement de ladite plaque de support ;
- et/ou de la pile à combustible comportant ladite électrode.

Les moyens de commande 150 peuvent comporter au moins une autre entrée 152d, pouvant être reliée aux bornes électriques de la pile à combustible et/ou à la cathode 250. Une régulation en courant est alors réalisée.

Les moyens de commande 150 peuvent communiquer avec les autres moyens, et notamment les moyens 140, par exemple avec l'obturateur mobile, ou ses moyens de positionnement, et/ou avec les moyens de contrôle d'un compresseur, par l'intermédiaire de moyens 124. Ces moyens peuvent être des éléments conducteurs (fils métalliques) ou des moyens de communication utilisant des ondes radiofréquences (wifi, RFID). Ces moyens 124 permettent la communication d'un signal, par exemple des impulsions électriques, entre deux dispositifs.

Éventuellement, d'autres moyens 180, dits dispositif de supervision « haut », peuvent être prévus afin de contrôler le fonctionnement des moyens de commande 150. En variante, une supervision haute est effectuée par un opérateur ou par la demande d'énergie électrique de l'environnement client.

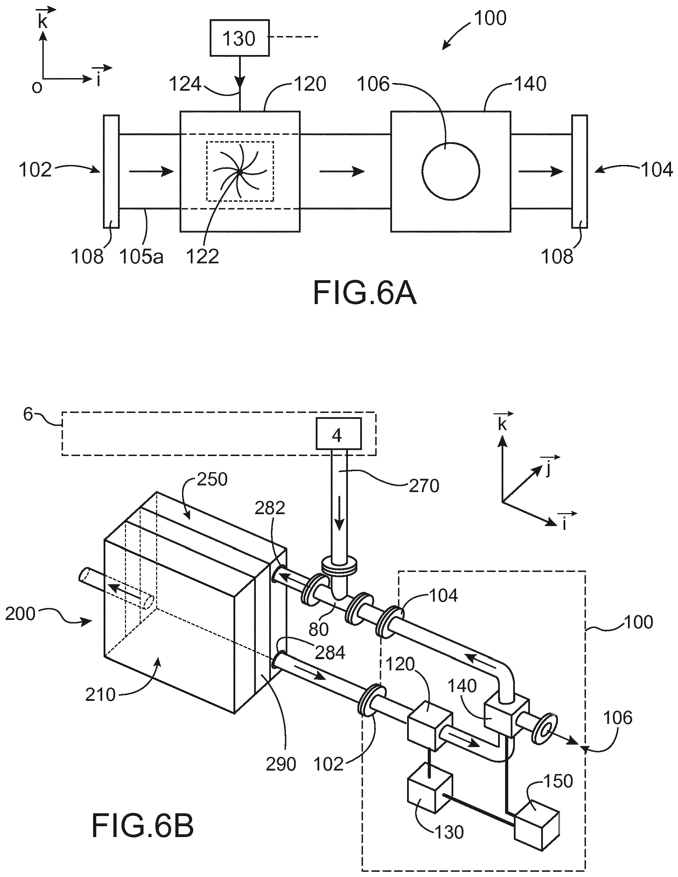

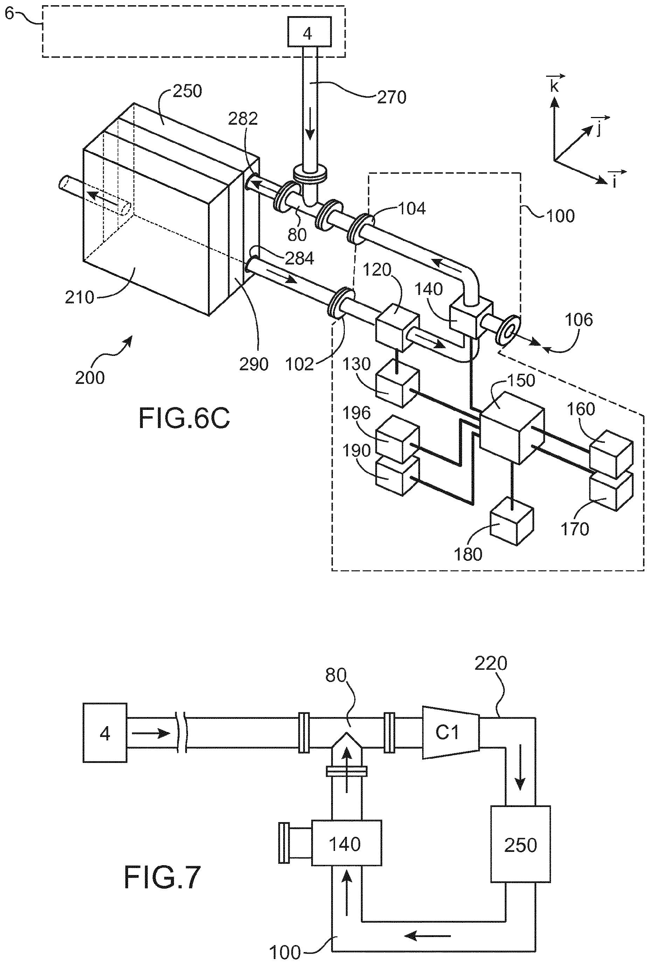

Comme déjà expliqué ci-dessus, un canal de recirculation comporte un compresseur 120 (figures 6A, 6B et 6C). Par exemple, celui-ci comporte une hélice 122 dont la vitesse et le sens de rotation peuvent être commandés par les moyens 150 de commande, par exemple par l'intermédiaire d'un dispositif de contrôle 130 (il peut s'agir de l'onduleur ou du variateur qui l'alimente) lui-même relié aux moyens de commande 150 par l'intermédiaire de moyens de communication 124. Les moyens de commande 150 peuvent être reliés à des moyens 154c permettant de mesurer la pression du fluide dans le canal 105, les moyens 150 permettant alors de contrôler la pression du fluide dans le canal 105.

Le dispositif compresseur 120 permet de déplacer le fluide de la première ouverture 102 vers la deuxième ouverture 104 et/ou la troisième ouverture 106. De préférence, le compresseur est placé entre la première ouverture 102 et le dispositif d'évacuation 140 afin que la pression du fluide 90 soit la plus importante dans la partie amont 105a du canal 105 que dans sa partie aval 105b.

En variante, un compresseur (C1) peut être placé entre le raccord 80 et l'entrée du canal d'alimentation 220 pour injecter le fluide sous pression dans ce canal (figure 7). La sortie 104 du canal de recirculation est de préférence connectée en amont et le plus loin possible dudit compresseur qui permet d'homogénéiser le mélange se réalisant dans le raccord 80.

Eventuellement, un compresseur (C1') est connecté en amont de l'ouverture du raccord 80, permettant à un autre fluide, en l'occurrence de l'air provenant d'un milieu extérieur ou du réservoir 4, de se mélanger avec le fluide, appauvri en oxygène et provenant de la recirculation, et un autre compresseur (C2) est connecté au canal de recirculation entre la sortie 284 du canal de refoulement et les moyens d'évacuation 140.

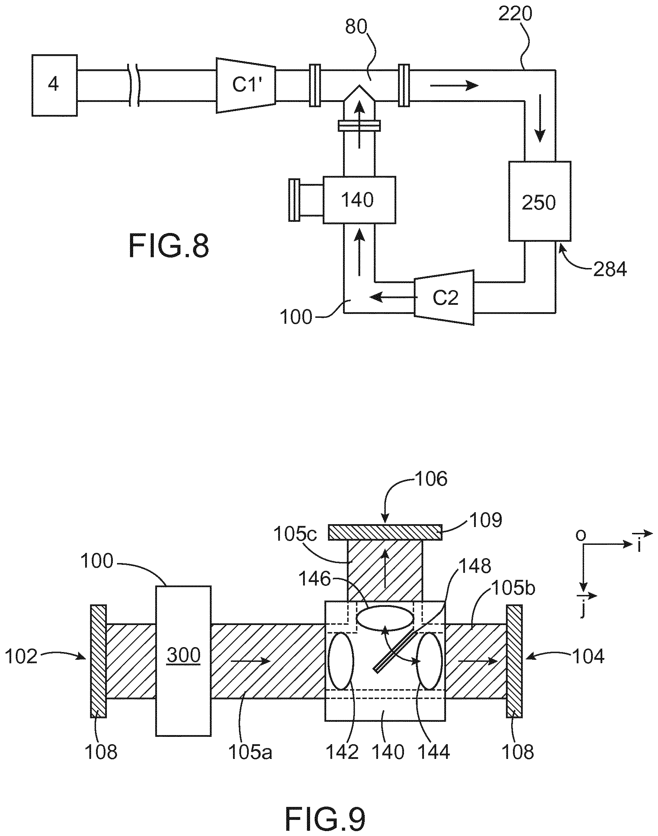

Selon une autre variante d'un des dispositifs précédents, illustrée en figure 9, un dispositif d'humidification 300 peut être interposé entre la première et la deuxième ouverture du canal de recirculation 100 de manière à pouvoir réinjecter l'humidité sortant du canal de refoulement à l'entrée du canal d'admission

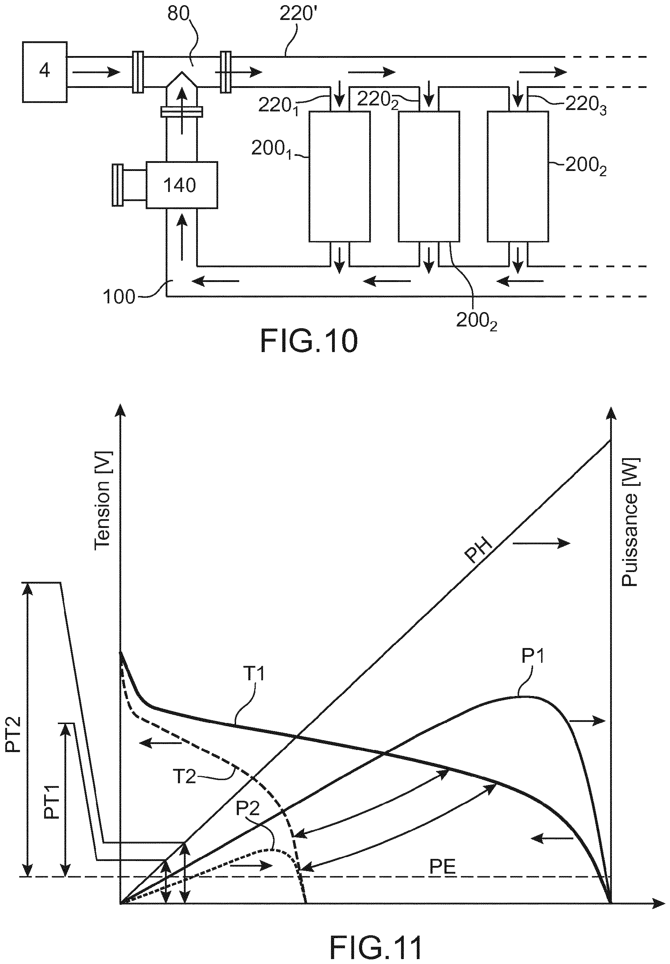

Selon une variante, et comme illustrée en figure 10, l'invention s'applique également à un canal de recirculation 100' commun connecté, par exemple par l'intermédiaire d'un raccord 80, à un canal alimentation 220' à partir duquel plusieurs canaux d'alimentation 220₁, 220₂, 220₃, permettent d'alimenter différentes cellules 200₁, 200₂, 200₃, empilées comme expliqué en lien avec les figures 12A-C. Chacune de ces cellules à une structure telle que décrite ci-dessus en liaison avec la figure 4. Ce canal de recirculation 100' permet de récupérer le fluide sortant des canaux de refoulement des différentes piles et de réinjecter au moins une partie de ce fluide aux entrées des canaux d'admission des cellules.

Le canal de recirculation 100' a la même structure que ceux qui ont été décrits ci-dessus, par exemple en liaison avec les figures 2A - 2C ou 6A.

La recirculation a alors lieu comme décrit ci-dessus en liaison avec les autres modes de réalisation.

Autrement dit, l'invention s'applique non seulement à une cellule individuelle, mais également à un empilement de cellules.

Un procédé d'utilisation de l'un des dispositifs ci-dessus est décrit ci-après.

Sur la figure 11, les courbes solides représentent la tension T1 et la puissance P1 délivrées par une pile à hydrogène comportant une cellule électrochimique. La puissance contenue dans l'hydrogène consommé est illustrée par la courbe PH. La droite pointillée PE indique le niveau de puissance électrique requise pour que la pile fonctionne. Une part de l'hydrogène consommé libère donc de la chaleur selon la réaction électrochimique (2) ci-dessus. La puissance libérée sous forme de chaleur (PT1) correspond à la différence entre la courbe PH et PE.

Un canal de recirculation tel que décrit ci-dessus permet de réintroduire au moins une partie du fluide dans le canal d'alimentation de la cathode de la pile à hydrogène. Cela a pour effet d'introduire un fluide comportant moins d'oxygène, plus de molécules d'eau et une partie de l'énergie thermique cédée lors de la réaction électrochimique (2).

De ce fait, le rendement de la réaction (2) est limité par le manque de comburant ou plus précisément la baisse en concentration d'éléments comburants, en l'occurrence l'oxygène dans le cas présent. La tension électrique et la puissance de la pile chute alors, les courbes T1 et P1 sont remplacées par les courbes T2 et P2 respectivement. Cette chute peut être contrôlée en fonction de la proportion de gaz réactant réintroduit dans le canal d'alimentation. Les performances de la pile peuvent alors être réduites ou diminuées en fonction de la position, par exemple, de l'obturateur mobile 148 dans le système d'évacuation 140.

Pour un même niveau de puissance électrique requise, la pile à combustible peut donc consommer plus d'hydrogène, selon la réaction électrochimique (2), lorsqu'elle est connectée à un canal de recirculation ci-dessus (PT2)*)*. La réaction électrochimique (2) étant exothermique, une augmentation de la quantité d'hydrogène consommée dans la cathode entraîne une élévation de la température de ladite cathode. Le canal de recirculation permet ainsi de contrôler la proportion de chaleur produite lors de la réaction électrochimique (2). Il est alors possible de maintenir ou de monter en température la cellule électrochimique d'une pile à combustible lorsque celle-ci est en mode veille, en faible charge ou éventuellement à l'arrêt.

Un opérateur, ou bien les moyens 150 de commande, peut commander les moyens 140, par exemple la position de l'obturateur mobile 148 (figure 4), de façon à adapter la proportion de fluide réinjecté dans le canal d'alimentation. La puissance électrique délivrée par la cellule électrochimique peut être contrôlée en fonction du réglage des moyens 140, par exemple de la position de l'obturateur mobile 148 dans le dispositif d'évacuation 140. Le phénomène d'oscillation de courant peut alors être atténué, voire supprimé.

Avantageusement, l'invention permet de récupérer au moins une partie de la chaleur produite par une cellule électrochimique, pour la réintroduire dans la même cellule électrochimique.

Ainsi, l'invention peut permettre de maintenir plus facilement une cellule électrochimique dans une gamme de température comprise entre 50°C et 70°C, ou entre 50°C et 95°C, ou entre 50°C et 105°C, même en mode veille ou « stand-by » en anglais.

L'invention peut également permettre d'augmenter la température d'une cellule électrochimique à l'arrêt, connectée au moins partiellement à une cellule électrochimique en fonctionnement, par l'intermédiaire de l'un des canaux de recirculation précédents.

Avantageusement, la cellule électrochimique est maintenue dans une gamme de température favorable pour permettre à ladite cellule électrochimique de répondre à des demandes brusques de l'environnement client. Il n'est alors plus nécessaire de recourir à un convertisseur de tension, ce qui signifie une diminution du volume du dispositif et une réduction de son coût de fabrication par rapport à l'état de la technique.

Une pile à combustible peut comporter plusieurs cellules électrochimiques décrites ci-dessus, connectées en série.

Un autre avantage de l'invention est de pouvoir réhydrater une membrane PEMFC en prélevant l'eau produite par une cellule électrochimique, pour l'introduire de nouveau dans la cellule électrochimique. Il n'est alors plus utile d'avoir recours à des dispositifs auxiliaire d'humidification des fluides réactants, dispositif volumineux et consommant une partie de l'énergie produite par la pile.

La suppression des modules auxiliaires ci-dessus permet notamment de supprimer les risques d'endommagement de la cellule électrochimique par les oscillations de courant induites par ces modules.

En effet, l'autre avantage de l'invention est de pouvoir éliminer les phénomènes d'oscillation de courant induisant généralement une dégradation irréversible de la pile à combustible par la suppression de leur sources qui sont généralement des composants d'électronique de puissance actifs tel que des convertisseurs courant continu/courant continu, assurant l'interface entre le réseau alimenté et la pile à combustible, lorsque la plage de tension de fonctionnement de la pile à combustible peut-être appariée au niveau de la tension du réseau qu'elle doit alimenter.

L'appairage peut se réaliser au niveau de la pile combustible par le nombre de cellules (200) empilées.

Toutefois, pour être possible, un pilotage de la puissance délivrée par la pile, initialement réalisé par les composants électroniques d'interface supprimés, doit-être réalisé.

Ainsi l'invention présente l'avantage de permettre aussi d'assurer ce pilotage tout en permettant à la pile combustible d'être alimentée de façon pérenne. En effet, comme on le comprend de la figure 11, la commande des moyens d'évacuation 140, par exemple la position de l'obturateur mobile 148, permet de modifier la courbe tension/courant et donc de moduler la puissance fournie. Comme la tension de fonctionnement de la pile à combustible lui est imposée par le réseau sur laquelle elle se branche, un opérateur, ou les moyens de commande 150, peuvent contrôler le courant fourni et/ou la puissance fournie en commandant les moyens d'évacuation 140, par exemple la position de l'obturateur mobile 148 ; cette commande peut être effectuée en boucle fermée, via un capteur de courant 350 situé entre 200 et 300 connecté aux moyen de commande 150.

La figure 13 représente schématiquement une ou plusieurs cellules électrochimiques 200 selon l'invention, à l'interface avec un réseau 360, sans convertisseur de tension.

On a représenté, en figure 4, la connexion de ce capteur 350 aux moyens de contrôle 150.

## Revendications

1. Circuit d'alimentation d'une cathode (250) d'au moins une cellule électrochimique (200) de type PEMFC, laquelle comporte en outre une membrane (290) séparant une anode (210) et ladite cathode (250), ce circuit comportant :
- un canal d'alimentation (220) comportant une entrée (282) et permettant d'amener un fluide (90) en contact avec la cathode (250) ;
- un canal de refoulement (280) permettant l'évacuation de gaz depuis la cellule,
- un canal de recirculation (100, 100') délimité par une paroi au moins partiellement étanche au fluide (90), comportant :
- une première ouverture (102) connectée à la sortie (284) du canal de refoulement (280) ;
- une deuxième ouverture (104);
- une troisième ouverture (106) et des moyens d'évacuation (140) permettant à au moins une partie du fluide (90) d'être évacué du canal de recirculation par la troisième ouverture (106),
**caractérisée en ce que** :
- ladite deuxième ouverture (104) est connectée à l'entrée (282) du canal d'alimentation (280) par l'intermédiaire d'un raccord (80), ledit raccord permettant en outre d'amener un fluide comburant à la cathode, lequel se mélange avec le fluide sortant du canal de recirculation par la deuxième ouverture;
- le canal de recirculation (100, 100') comporte en outre au moins un compresseur (C1, C2), lequel permet de contrôler les débits et/ou la proportion des fluides à mélanger dans le raccord,
- le circuit comporte en outre des moyens (150) de commande configurés pour commander les moyens d'évacuation (140), en fonction de la valeur de la tension électrique aux bornes de la cellule électrochimique et/ou de sa température interne, et/ou pour commander le régime de fonctionnement d'au moins un compresseur (C'1, C1, C2), de sorte que la température de la cellule électrochimique soit égale ou supérieure à 50°C.

2. Circuit d'alimentation selon la revendication 1, les moyens d'évacuation (140) comportant un obturateur mobile (148) permettant de répartir la quantité de fluide (90) s'écoulant par la deuxième ouverture (104) et la troisième ouverture (106) du canal de recirculation.

3. Circuit d'alimentation selon l'une des revendications 1 ou 2, comportant en outre au moins un compresseur (C1') connecté en amont d'une ouverture du raccord (80) permettant d'amener un fluide comburant à la cathode.

4. Circuit d'alimentation selon l'une des revendications 1 à 3, le canal d'alimentation comportant en outre au moins un compresseur (C1, C2).

5. Circuit d'alimentation selon l'une des revendications 1 à 4, lesdits moyens (150) de commande comportant des moyens (152a) pour recevoir au moins signal d'au moins un capteur de pression (160) et/ou d'au moins un capteur de température (170) et/ou un capteur de débit, et/ou un capteur de concentration d'oxygène et/ou un capteur d'humidité et/ou un signal des bornes électriques de ladite cellule électrochimique (200) et/ou de ladite cathode (250) et/ou le signal d'un capteur de courant (350).

6. Circuit d'alimentation selon l'une des revendications précédentes, comportant en outre:
- au moins un capteur de pression (160), par exemple positionné dans le canal de recirculation (100) ;
- et/ou au moins un capteur de température (170) ;
- et/ou un dispositif d'humidification (300).

7. Pile à combustible comportant une pluralité de cellules électrochimiques et au moins un circuit d'alimentation selon l'une des revendications là 6.

8. Dispositif d'alimentation d'un réseau électrique (300), comportant une cellule électrochimique munie d'au moins un circuit d'alimentation selon l'une des revendications 1 à 6 ou une pile selon la revendication 7, sans convertisseur de tension, et comportant en outre un capteur de courant (350) pour l'interface avec le réseau.

9. Réseau électrique (360) comportant en outre un dispositif d'alimentation selon la revendication 8.

10. Procédé d'utilisation d'au moins une cellule électrochimique comportant un circuit d'alimentation selon l'une des revendications 1 à 6 ou d'une pile selon la revendication 7 ou d'un dispositif selon la revendication 8, le régime de fonctionnement du compresseur (C1, C1', C2) étant modifié de sorte que la température de la cellule électrochimique soit égale ou supérieure à 50°C.

11. Procédé d'utilisation d'une cellule électrochimique comportant un circuit d'alimentation selon l'une des revendications 1 à 6, ou d'une pile selon la revendication 7 ou d'un dispositif selon la revendication 8, les moyens d'évacuation étant contrôlés en fonction de la valeur de la tension électrique aux bornes de la cellule électrochimique et/ou de sa température interne et/ou de sorte que la température de la cellule électrochimique soit égale ou supérieure à 50°C.

12. Procédé d'utilisation d'au moins une cellule électrochimique comportant un circuit d'alimentation selon l'une des a revendications 1 à 6, ou d'une pile selon la revendication 7, ou d'un dispositif selon la revendication 8, dans lequel on fait varier le courant fourni et/ou la puissance fournie en commandant les moyens d'évacuation (140).

## Patentansprüche

1. Speisekreislauf einer Kathode (250) mindestens einer elektrochemischen Zelle (200) des Typs PEMFC, die weiter eine Membran (290) aufweist, welche eine Anode (210) und die Kathode (250) trennt, wobei der Kreislauf aufweist:
einen Speisekanal (220), der einen Eintritt (282) aufweist und ermöglicht, ein Fluid (90) in Kontakt mit der Kathode (250) zu bringen;
einen Ausstoßkanal (280), der das Abführen von Gas aus der Zelle ermöglicht,
einen Rezirkulationskanal (100, 100'), der durch eine zumindest teilweise gegenüber dem Fluid (90) dichte Wand begrenzt wird, aufweisend:
eine erste Öffnung (102), die an den Austritt (284) des Ausstoßkanals (280) angeschlossen ist;
eine zweite Öffnung (104);
eine dritte Öffnung (106) und Abführeinrichtungen (140), die ermöglichen, dass mindestens ein Teil des Fluids (90) aus dem Rezirkulationskanal durch die dritte Öffnung (106) abgeführt wird,
**dadurch gekennzeichnet, dass**:
die zweite Öffnung (104) an den Eintritt (282) des Speisekanals (280) über einen Anschluss (80) angeschlossen ist, wobei der Anschluss ermöglicht, weiter ein Sauerstoffträgerfluid zur Kathode zu bringen, das sich mit dem Fluid vermischt, welches aus dem Rezirkulationskanal durch die zweite Öffnung austritt;
der Rezirkulationskanal (100, 100') weiter mindestens einen Kompressor (C1, C2) aufweist, der ermöglicht, die Durchsätze und/oder den Anteil der zu mischenden Fluide in dem Anschluss zu steuern,
wobei der Kreislauf weiter Steuereinrichtungen (150) aufweist, die konfiguriert sind, die Abführeinrichtungen (140) in Abhängigkeit vom Wert der elektrischen Spannung an den Anschlussklemmen der elektrochemischen Zelle und/oder ihrer Innentemperatur zu steuern, und/oder um die Betriebsweise mindestens eines Kompressors (C'1, C1, C2) so zu steuern, dass die Temperatur der elektrochemischen Zelle gleich oder größer als 50 °C ist.

2. Speisekreislauf nach Anspruch 1, wobei die Abführeinrichtungen (140) ein bewegliches Verschlussstück (148) aufweisen, das ermöglicht, die Menge an Fluid (90) aufzuteilen, die durch die zweite Öffnung (104) und die dritte Öffnung (106) des Rezirkulationskanals strömt.

3. Speisekreislauf nach einem der Ansprüche 1 oder 2, weiter aufweisend mindestens einen Kompressor (C1'), der in Strömungsrichtung vor einer Öffnung des Anschlusses (80) angeschlossen ist, welcher ermöglicht, ein Sauerstoffträgerfluid zur Kathode zu bringen.

4. Speisekreislauf nach einem der Ansprüche 1 bis 3, wobei der Speisekanal weiter mindestens einen Kompressor (C1, C2) aufweist.

5. Speisekreislauf nach einem der Ansprüche 1 bis 4, wobei die Steuereinrichtungen (150) Einrichtungen (152a) aufweist zum Empfangen zumindest von: einem Signal mindestens eines Drucksensors (160) und/oder mindestens eines Temperatursensors (170) und/oder eines Durchsatzsensors und/oder eines Sauerstoffkonzentrationssensors und/oder eines Feuchtigkeitssensors, und/oder einem Signal der elektrischen Anschlussklemmen der elektrochemischen Zelle (200) und/oder der Kathode (250), und/oder dem Signal eines Stromsensors (350).

6. Speisekreislauf nach einem der vorhergehenden Ansprüche, weiter aufweisend:
mindestens einen Drucksensor (160), der beispielsweise in dem Rezirkulationskanal (100) positioniert ist;
und/oder mindestens einen Temperatursensor (170);
und/oder eine Befeuchtungsvorrichtung (300).

7. Brennstoffzelle, aufweisend eine Mehrzahl von elektrochemischen Zellen und mindestens einen Speisekreislauf nach einem der Ansprüche 1 bis 6.

8. Vorrichtung zur Speisung eines elektrischen Netzes (300), aufweisend eine elektrochemische Zelle, die mit mindestens einem Speisekreislauf nach einem der Ansprüche 1 bis 6 oder einer Brennstoffzelle nach Anspruch 7 versehen ist, ohne Spannungswandler, und weiter einen Stromsensor (350) für die Schnittstelle zum Netz aufweist.

9. Elektrisches Netz (360), weiter aufweisend eine Speisevorrichtung nach Anspruch 8.

10. Verfahren zur Verwendung mindestens einer elektrochemischen Zelle, die einen Speisekreislauf nach einem der Ansprüche 1 bis 6 aufweist, oder einer Brennstoffzelle nach Anspruch 7, oder einer Vorrichtung nach Anspruch 8, wobei die Betriebsweise des Kompressors (C1, C'1, C2) so modifiziert wird, dass die Temperatur der elektrochemischen Zelle gleich oder größer als 50 °C ist.

11. Verfahren zur Verwendung einer elektrochemischen Zelle, die einen Speisekreislauf nach einem der Ansprüche 1 bis 6 aufweist, oder einer Brennstoffzelle nach Anspruch 7, oder einer Vorrichtung nach Anspruch 8, wobei die Abführeinrichtungen in Abhängigkeit vom Wert der elektrischen Spannung an den Anschlussklemmen der elektrochemischen Zelle und/oder ihrer Innentemperatur gesteuert werden, und/oder so, dass die Temperatur der elektrochemischen Zelle gleich oder größer als 50 °C ist.

12. Verfahren zur Verwendung mindestens einer elektrochemischen Zelle, die einen Speisekreislauf nach einem der Ansprüche 1 bis 6 aufweist, oder einer Brennstoffzelle nach Anspruch 7, oder einer Vorrichtung nach Anspruch 8, wobei man den gelieferten Strom und/oder die gelieferte Leistung durch Steuern der Abführeinrichtungen (140) variiert.

## Claims

1. Supply circuit of the cathode (250) of at least one electrochemical cell (200) of the PEMFC type, which further comprises a membrane (290) separating an anode (210) and said cathode (250), with this circuit comprising:
- a supply channel (220) comprising an inlet (282) and which makes it possible to convey a fluid (90) in contact with the cathode (250);
- a discharge channel (280) that makes it possible to remove gases from the cell,
- a recirculation channel (100, 100') delimited by a wall at least partially sealing the fluid (90), comprising:
- a first opening (102) connected to the outlet (284) of the discharge channel (280);
- a second opening (104); - a third opening (106) and means for removing (140) allowing at least one portion of the fluid (90) to be removed from the recirculation channel by the third opening (106),
**characterized in that**:
- the second opening (104) is connected to the inlet (282) of the supply channel (280), by the intermediary of a connector (80), said connector further making it possible to convey a combustion agent fluid to the cathode, which mixes with the fluid exiting from the recirculation channel by the second opening
- the recirculation channel (100, 100') further comprising at least one compressor (C1, C2), which makes it possible to control the flow rates and/or the proportion of the fluids to be mixed in the connector;.- the circuit further comprising control means (150) configured for controlling the means (140) for removal, according to the value of the electrical voltage at the terminals of the electrochemical cell and/or to its internal temperature and/or the operating state of at least one compressor (C1, C1', C2) in such a way that the temperature of the electrochemical cell is equal to or greater than 50°C.

2. Supply circuit according to one of claims 1, the means for removal (140) comprising a movable sealing member (148) making it possible to distribute the quantity of fluid (90) flowing through the second opening (104) and the third opening (106) of the recirculation channel.

3. Supply circuit according to one of claims 1 or 2, further comprising at least one compressor (C1') connected upstream of an opening of the connector (80) making it possible to convey a combustion agent fluid to the cathode.

4. Supply circuit according to one of claims 1 to 3, the supply channel further comprising at least one compressor (C1, C2).

5. Supply circuit according to one of claims 1 to 4, said control means (150) comprising means (152a) for receiving at least one signal from at least one pressure sensor (160) and/or from at least one temperature sensor (170) and/or one flow rate sensor, and/or one oxygen concentration sensor and/or one humidity sensor and/or one signal from the electrical terminals of said electrochemical cell (200) and/or of said cathode (250) and/or the signal from a current sensor (350).

6. Supply circuit according to one of the preceding claims, further comprising:
- at least one pressure sensor (160), for example positioned in the recirculation channel (100);
- and/or at least one temperature sensor (170);
- and/or a humidification device (300).

7. Fuel cell comprising a plurality of electrochemical cells and at least one supply circuit according to one of claims 1 to 6.

8. Device for supplying an electrical network (300), comprising an electrochemical cell provided with at least one supply circuit according to one of claims 1 to 6 or a cell according to claim 7, without a voltage converter, and further comprising a current sensor (350) for the interface with the network.

9. Electrical network (360) further comprising a supply device according to claim 8.

10. Method for using at least one electrochemical cell comprising a supply circuit according to one of claims 1 to 6 or a cell according to claim 7 or a device according to claim 8, the operating state of the compressor (C1, C1', C2) being modified in such a way that the temperature of the electrochemical cell is equal to or greater than 50°C.

11. Method for using an electrochemical cell comprising a supply circuit according to one of claims 1 to 6, or a cell according to claim 7 or a device according to claim 8, the means for removal being controlled according to the value of the electrical voltage at the terminals of the electrochemical cell and/or to its internal temperature and/or in such a way that the temperature of the electrochemical cell is equal to or greater than 50°C.

12. Method for using at least one electrochemical cell comprising a supply circuit according to one of claims 1 to 6, or a cell according to claim 7, or a device according to claim 8, wherein the current and/or the power supplied is made to vary by controlling the means for removal (140).
